# EUROPEAN PATENT APPLICATION

(11) **EP 1 715 006 A1**
(43) Date of publication of application: **25.10.2006**
(21) Application number: 05709612.5
(22) Date of filing: 02.02.2005
(51) Int. Cl.: C08L 101/00, C08J 5/18, C08K 5/00, C08K 9/04, C08L 67/04, C08L 101/16

(54) **COMPOSITE MATERIAL AND THERMOPLASTIC RESIN COMPOSITE MATERIAL USING SAME**

(30) Priority: 04.02.2004 JP 2004027985
(71) Applicant: Asahi Kasei Life & Living Corporation, Tokyo, 100-8440 (JP)
(72) Inventor: MIYAMOTO, Ikuya c/o Asahi Kasei Kabushiki Kaisha, Tokyo (JP); KASHIWAGI, Yoshiyuki c/o Asahi Kasei Kabushiki K., Tokyo (JP)
(74) Representative: Strehl Schübel-Hopf & Partner
(86) International application number: PCT/JP2005/001491
(87) International publication number: WO 2005/075569

(57) **Abstract**

Disclosed is a composite material which is composed of (A) 100 parts by weight of at least one lamellar organosilicate which is obtained by treating a lamellar silicate with an organic onium salt, and (B) 50-1000 parts by weight of at least one nonionic surfactant.

## Description

### TECHNICAL FIELD

The present invention relates to a composite material suitable as an additive for a thermoplastic resin, and a thermoplastic resin composite material produced by adding the same to a thermoplastic resin, which is excellent in mechanical strength and appearance upon stretching and excellent in transparency.

### BACKGROUND ART

Conventionally, to improve mechanical strength of a thermoplastic resin, which is typically polyamide or polyolefin, a filler having high rigidity is mixed and the mixture is kneaded. Two methods are generally used as a method of combining such a filler and a resin: one is to perform polymerization with a filler being dispersed in a monomer and the other is to add a filler to a molten thermoplastic resin and knead the mixture. Of the two, from advantages of simplicity of the process and low environmental load, a method of dispersing a filler by the latter method is often employed. In particular, Patent Document 1 discloses, as a technique of finely dispersing a filler in a molten thermoplastic resin, a technique of combining by kneading a dispersion composition in which an organically modified layered compound that has undergone ion-exchange with quaternary ammonium ions and an organic solvent are mixed and a molten thermoplastic resin in a twin screw extruder. However, this technique has a disadvantage that removing an organic solvent evaporated during production from the thermoplastic resin is difficult.

In recent years, from the viewpoint of environmental conservation, thermoplastic resins with biodegradability have come into use for various purposes. Techniques of combining a filler for improving the heat resistance and the mechanical strength of such thermoplastic resins with biodegradability have also been disclosed as in other thermoplastic resins.
For example, Patent Document 2 discloses a method of producing biodegradable polyester having an excellent crystallization rate by allowing layered silicate to swell with glycol, then adding aliphatic dicarboxylic acid and performing polymerization.
Also, Patent Document 3 discloses a technique in which a composite material whose heat sealing properties are improved by melt-kneading aliphatic polyester and an organically modified layered compound is provided.
Furthermore, Patent Document 4 discloses a technique in which a nonionic surfactant is combined with a layered compound by melt intercalation and the composite is added to aliphatic polyester, thereby providing a film having excellent flame retardancy.

On the other hand, Patent Document 5 discloses a technique for improving heat resistance, impact resistance and wet heat durability by adding, as an anti-hydrolysis agent, at least one material selected from surface-treated inorganic fillers, layered silicates, waxes, hydrophobic plasticizers, olefin resins and carbodiimide compounds to a composition containing a polylactic acid resin and an aliphatic polyester resin.
Further, Patent Document 6 discloses a technique in which a compound such as polyalkylene oxide, which is a processing aid, and organically modified layered silicate are added to aliphatic polyester to improve processability for forming into a film, thereby providing a biodegradable resin film excellent in mechanical strength and barrier properties.

Further, Patent Document 7 discloses a technique in which layered clay mineral organically modified with onium salt containing a hydroxyl group is added to a biodegradable resin, thereby providing a biodegradable resin composite material excellent in elastic modulus and crystallization rate.
Also, Patent Document 8 discloses that a biaxially oriented film having low dry heat shrinkage can be obtained by biaxially stretching a polylactic acid resin composition containing 0.1 to 1.0% by weight of layered silicate.

However, in all of the above techniques, dispersibility of layered silicate in the thermoplastic resin composition provided is insufficient, and the transparency of the composition is insufficient. Therefore, its application to films or sheet is limited. In addition, properties such as mechanical properties are not sufficiently improved. Moreover, when layered clay mineral is added to a resin, the weight average molecular weight of the resin decreases due to operation such as melt-kneading, resulting in a problem of decrease in stretchability.
Patent Document 1: JP-A-8-302062
Patent Document 2: JP-A-9-169893
Patent Document 3: JP-A-2000-17157
Patent Document 4: JP-A-2002-188000
Patent Document 5: JP-A-2002-309074
Patent Document 6: JP-A-2003-82212
Patent Document 7: JP-A-2003-73538
Patent Document 8: JP-A-2003-261695

### DISCLOSURE OF THE INVENTION

An object of the present invention is to provide a composite material suitable as an additive for preparing a stretched film and an extruded sheet having high mechanical strength and excellent in transparency and appearance.
Another object of the present invention is to provide a thermoplastic resin composite material produced by adding the above composite material to a thermoplastic resin, and a film produced by stretching the same.

The present inventors have conducted intensive studies to solve the aforementioned problem and as a result have found that a thermoplastic resin composite material excellent in not only elastic modulus but also transparency and stretchability can be provided by adding a composite material produced by combining the following (A) component and (B) component to a thermoplastic resin, and the present invention has been completed.
(A) an organically modified layered silicate obtained by treating a layered silicate with an organic onium salt
(B) a nonionic surfactant

Accordingly, the present invention is as follows.
(1) A composite material comprising (A) 100 parts by weight of at least one organically modified layered silicate produced by treating a layered silicate with an organic onium salt and (B) 50 to 1000 parts by weight of at least one nonionic surfactant.
(2) The composite material according to (1), wherein the organic onium salt contains at least one polar group.
(3) The composite material according to (2), wherein the polar group is a hydroxyl group.
(4) The composite material according to any one of (1) to (3), wherein the nonionic surfactant is polyoxyethylene alkyl ether represented by the following formula:

   CₙH₂ₙ₊₁-(OCH₂-CH₂)ₘOH (n=12 to 18, m=2 to 40)
(5) A thermoplastic resin composite material comprising at least one composite material according to any one of (1) to (4) and at least one thermoplastic resin.
(6) The thermoplastic resin composite material according to (5), wherein the thermoplastic resin is an aliphatic polyester.
(7) A stretched film comprising the thermoplastic resin composite material according to (5) or (6).

A thermoplastic resin composite material excellent in mechanical strength such as elastic modulus, appearance upon stretching and transparency can be provided by melt blending the composite material of the present invention with a thermoplastic resin.

### BEST MODE FOR CARRYING OUT THE INVENTION

The present invention is described in detail below focusing on preferred embodiments.
Layered silicates in the present invention include clay minerals such as pyrophyllite, smectite, vermiculite and mica. These may be a purified material of a naturally occurring substance or a synthetic material synthesized by a known method such as a hydrothermal method. Specific examples of layered silicates include montmorillonite, hectorite, beidellite, saponite and synthetic fluorinated mica. Examples of montmorillonite include montmorillonite with the product name Cloisite Na available from Southern Clay Products Inc. and montmorillonite with the product name Kunipia RG available from Kunimine Industries Co., Ltd. Examples of synthetic fluorinated mica include one with the product name Somasif ME100 available from CO-OP Chemical Co., Ltd.

Such layered silicate has a continuous layer structure in which cations such as sodium ions, potassium ions or lithium ions are present in the interlayers, and is hydrophilic. Layered silicate therefore has a characteristic that it incorporates a polar solvent such as water into the interlayers and swells, and part thereof is exfoliated and dispersed. Swelling is a state in which the interlayer distance is increased as a third substance is incorporated into the layers. Exfoliation/dispersion is a state in which layers are exfoliated with further swelling and the layer structure is broken and layered silicate is finely dispersed.

The organically modified layered silicate in the present invention is obtained by organic modification by exchanging cations present in the interlayers of the above-described layered silicate with organic onium ions. Since organic onium ions are present between the layers, compatibility with an organic solvent or an organic material increases. Specifically, while layered silicate swells in the presence of a polar solvent such as water, organically modified layered silicate has a characteristic that it swells when an organic material is incorporated into the layers, making exfoliation/dispersion in an organic material such as a thermoplastic resin easier.

The organic onium salt in the present invention is a salt produced by formation of a coordinate bond between an organic component and a Lewis base. This corresponds to quaternary ammonium salts, organic phosphonium salts and organic sulfonium salts. Furthermore, organic amine compounds which produce cations when dissolved in an acidic polar solvent and amphoteric ion compounds are also equivalent to the organic onium salt. A quaternary ammonium salt or a cationized organic amine compound represented by the following formula (1) is preferably used.

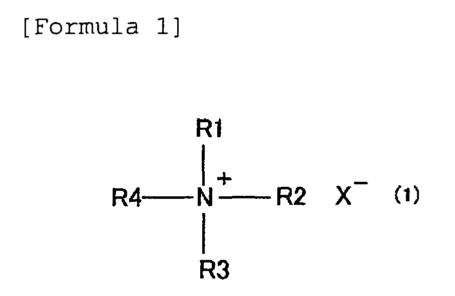

In the formula (1), R1, R2, R3 and R4 are each independently hydrogen or a saturated or unsaturated hydrocarbon group, which is typically methyl, ethyl, lauryl, cetyl, oleyl, isostearyl or stearyl. The hydrocarbon group may be linear or have a branched structure, or may be epoxidized. The hydrocarbon group may be derived from a natural product, which is typically beef tallow or coconut oil. The hydrocarbon group may contain a cycloalkane, an aromatic ring or an ester structure, or have a carboxylic acid as in betaine. Preferably, at least one hydrocarbon group of R1 to R4 has 10 or more carbon atoms. When the number of carbon atoms constituting the longest hydrocarbon group is less than 10, the compatibility between organically modified layered silicate and thermoplastic resin is insufficient, and properties may not be sufficiently improved. X represents an anion, and examples thereof include, but not limited to, halide ions such as a chloride ion and a bromide ion.

In the present invention, the organic onium salt more preferably contains at least one polar group.
The polar group as used herein means a functional group having polarity such as a hydroxyl group, a carboxylic acid group, a carboxylic acid derivative, a carboxylic acid anhydride, a nitro group or an imide group. Of these, organic onium salts containing a hydroxyl group are preferred. This is described in detail below.

The hydroxyl group may be present in the form of a hydroxyalkylene group or a polyoxyalkylene group. Although the position of a hydroxyl group in the organic onium salt in the present invention is not particularly limited, organic onium salts in which a hydroxyl group is bonded near a nitrogen atom are preferably used when an ammonium salt or amine is used as the organic onium salt. Examples of ammonium salts or amines to which a hydroxyl group is bonded include hardened tallow diethanolamine, dodecyldiethanolamine, methyl octadecyl dihydroxyethyl ammonium chloride and methyl dodecyl dihydroxypropyl ammonium chloride. Examples of organic ammonium compounds containing a polyoxyalkylene group include polyoxyethylene octadecyl dimethyl ammonium chloride and methyl dipolyoxypropylene octadecyl ammonium chloride. The number of moles of polyoxyalkylene groups added to the organic onium salt is optional.

Examples of organic onium salts having such a structure include organic onium salts with the product name Blaunon S-202, Blaunon S-204, Blaunon S-205T and Blaunon L-202 available from AOKI OIL INDUSTRIAL CO. LTD.; organic onium salts with the product name ETHOMEEN C/12, ETHOMEEN HT/12 and ETHOMEEN 18/12 available from LION AKZO CO., LTD.; and organic onium salts with the product name AMPHITOL 20BS, AMPHITOL 24B and AMPHITOL 86B available from KAO CORPORATION.

The method of synthesizing organically modified layered silicate by combining an organic onium salt and a layered silicate in the present invention is not particularly limited. When using an amine compound or an amphoteric ion compound, a method may be employed in which a hydrophilic solvent is first acidified with hydrochloric acid, then layered silicate is dispersed therein, and the amine compound or the amphoteric ion compound is formed into cations, and then ion-exchange with the layered silicate is performed. Examples of organically modified layered silicate thus obtained include organically modified layered silicate with the product name Cloisite 10A, Cloisite 15A, Cloisite 20A, Cloisite 25A and Cloisite 30B available from Southern Clay Products Inc. Examples of those containing an organic onium salt having a hydroxyl group as described above include Cloisite 30B available from Southern Clay Products Inc. and Somasif MEE available from CO-OP Chemical Co., Ltd.

In the present invention, when a film or the like is prepared by stretching the thermoplastic resin composite material containing the composite material and a thermoplastic resin, preferably a different organically modified layered silicate is used depending on the intended properties. Specifically, to improve the mechanical strength of a film in particular, organically modified layered silicate formed from montmorillonite layered silicate (e.g., the above-described Cloisite 30B) is preferably used. To improve gas barrier properties in particular, organically modified layered silicate formed from synthetic fluorinated mica having a relatively large aspect ratio (e.g., the above-described MEE) is preferably used.

The nonionic surfactant in the present invention has a function to make organically modified layered silicate swell and is composed of a hydrophilic moiety and a hydrophobic moiety.
The hydrophobic moiety is composed of a saturated or unsaturated hydrocarbon group, which is typically lauryl, cetyl, oleyl, isostearyl or stearyl. The hydrocarbon group may be linear or have a branched structure, or may be epoxidized. The hydrocarbon group may be derived from fatty acid purified from a natural product, which is typically beef tallow or coconut oil. The hydrocarbon group may contain a cycloalkane such as rosin or lanolin, may be an aromatic hydrocarbon such as benzene or phenol, or may have ester as in acrylate and methacrylate, or have a carboxylic acid as in betaine.
Preferably, the hydrophilic moiety contains any structure of hydroxyalkylene, polyoxyalkylene, carboxyl, ester, amine or amide. The structure is more preferably hydroxyalkylene or polyoxyalkylene.

Examples of nonionic surfactants satisfying such requirements include polyoxyethylene stearyl ether, polyoxyethylene dodecyl ether, polyoxyethylene monolaurate, polyoxyethylene octylphenyl ether, polyoxyethylene lanolin ether, polyoxyethylene rosin ester, polyoxyethylene stearate, stearic acid, octyl hydroxystearate, cholesteryl hydroxystearate, stearyldiethanolamine, dodecyldiethanolamine, oleic acid diethanolamide, coconut oil fatty acid diethanolamide and polyoxyethyleneoleylamide.

Of these nonionic surfactants, polyoxyethylene alkyl ether whose structure is not easily modified by hydrolysis or the like (see the following formula) is preferred.

CₙH₂ₙ₊₁-(OCH₂-CH₂)ₘOH (n=12 to 18, m=2 to 40)

"n" which represents the length of the carbon chain is preferably 12 to 18, more preferably 18. Further, "m" which represents the length of the polyoxyethylene chain is preferably 2 to 40, more preferably 2 to 20, further preferably 2 to 10. Examples of nonionic surfactants having a structure within the above range include nonionic surfactants with the product name EMALEX 602, EMALEX 703, EMALEX 805 and EMALEX 1605 available from Nihon-Emulsion Co., Ltd.

In the present invention, the method of synthesizing a composite material using an organically modified layered silicate (A) and a nonionic surfactant (B) is not particularly limited. For example, methods described in the following (I) and (II) may be used.
(I) A method of combining by melting a nonionic surfactant (B) by heating to the melting point or higher and then mixing the same with an organically modified layered silicate (A); and
(II) a method comprising dissolving a nonionic surfactant (B) in a solvent, mixing the resultant with a solution in which an organically modified layered silicate (A) is dissolved in a similar solvent, thereby combining the two, and then removing the solvent.

While both methods can be used, the method (I) is preferably used because the amount of waste is low. The method of producing a composite material according to the method (I) is described in detail below.
First, organically modified layered silicate sufficiently dried by vacuum drying is added to a nonionic surfactant melted by heating to the melting point or higher, and the mixture is kneaded. When combined by such a method, the nonionic surfactant is incorporated into the layer of organically modified layered silicate, and can make the organically modified layered silicate swell. In the obtained composite material, exfoliation and dispersion occur easily because organically modified layered silicate is swelled. In other words, due to the presence of the nonionic surfactant on the surface and in the layer of the organically modified layered silicate, no agglomerate of organically modified layered silicate remain upon addition and kneading with a thermoplastic resin, and the dispersibility of organically modified layered silicate in a thermoplastic resin is improved. As a result, not only physical properties of thermoplastic resin such as mechanical strength are improved, but also light scattering caused by such agglomerates can be prevented and high transparency can be maintained. When organically modified layered silicate alone is added, part of the organically modified layered silicate remains in the form of agglomerates even after addition and kneading with a thermoplastic resin, and therefore not only improvement in physical properties such as mechanical strength due to addition of organically modified layered silicate is insufficient, but also sufficient transparency cannot be maintained due to light scattering caused by the agglomerate.

Further, when only organically modified layered silicate containing a hydroxyl group and a thermoplastic resin, e.g., aliphatic polyester, are melt-kneaded, hydroxyl groups come into contact with aliphatic polyester and decrease in the molecular weight is accelerated due to hydrolysis, possibly causing a negative effect on processability and properties of kneaded products. However, by adding the nonionic surfactant according to the present invention in addition to organically modified layered silicate containing a hydroxyl group and aliphatic polyester, the nonionic surfactant appropriately blocks hydroxyl groups of organically modified layered silicate and prevents contact with aliphatic polyester, and therefore lowering of molecular weight upon melt-processing can be prevented.

For the mixing ratio upon combining the organically modified layered silicate and the nonionic surfactant, the nonionic surfactant is added in an amount of preferably 50 parts by weight to 1000 parts by weight, more preferably 50 parts by weight to 300 parts by weight, further preferably 100 parts by weight to 200 parts by weight based on 100 parts by weight of the organically modified layered silicate. When the amount of the nonionic surfactant is less than 50 parts by weight based on 100 parts by weight of organically modified layered silicate, swelling of organically modified layered silicate may be insufficient, and the layer structure of the organically modified layered silicate is difficult to be broken. As a result, the advantage of improving dispersibility upon addition of the composite material to a thermoplastic resin is not sufficiently exhibited in some cases. On the other hand, when the amount of the nonionic surfactant is more than 1000 parts by weight based on 100 parts by weight of organically modified layered silicate, the concentration of the nonionic surfactant in the thermoplastic resin composite material described later increases. As a result, properties of thermoplastic resin may be greatly changed.
The composite material of the present invention may contain one or a plurality of organically modified layered silicates and one or a plurality of nonionic surfactants.

The thermoplastic resin in the present invention is not particularly limited, and means any resin that can be melt-formed by heating. Examples thereof include polystyrene resins, polyester resins, polyolefin resins and polyamide resins. Of these thermoplastic resins, aliphatic polyester resins are preferably used. Examples of such aliphatic polyester include polylactic acid, polybutylene succinate, polyethylene succinate, polybutylene succinate adipate, polybutylene adipate terephthalate, polycaprolactone, polybutylene succinate carbonate, polyglycolic acid and polyvinyl alcohol. In the present invention, these resins may be used alone or in combination of a plurality of resins. Polylactic acid excellent in mechanical strength and transparency and widely usable is suitably used. Specific examples of polylactic acid include polylactic acid with the product name Nature Works available from Cargill Dow LLC; polylactic acid with the product name LACEA available from Mitsui Chemicals, Inc.; polylactic acid with the product name Plamate available from DAINIPPON INK AND CHEMICALS, INCORPORATED; and polylactic acid with the product name LACTRON available from Kanebo Gosen, Ltd. Lactic acid, which is the monomer of polylactic acid, has optical isomers, and a polymer having any ratio of L-lactic acid to D-lactic acid may be used.
The thermoplastic resin composite material of the present invention may contain one or a plurality of composite materials and one or a plurality of thermoplastic resins.

A known technique of kneading a thermoplastic resin may be used as the method of producing a thermoplastic resin composite material by combining the composite material of the present invention with a thermoplastic resin. Preferably, a kneading method using a biaxial extruder in which dispersibility can be improved by effectively applying shear stress upon kneading is used.
The ratio of the composite material of the present invention added to a thermoplastic resin depends on the kind of thermoplastic resin required and the concentration of organically modified layered silicate in the composite material. For example, 0.5 part by weight to 120 parts by weight of the composite material of the present invention may be added to 100 parts by weight of a thermoplastic resin. The proportion is preferably 1.7 parts by weight to 41 parts by weight, more preferably 4.5 parts by weight to 20 parts by weight. When the proportion of the composite material in the thermoplastic resin composite material is less than 0.5 part by weight, the advantage of improving physical properties may be insufficient, and when the proportion is more than 120 parts by weight, properties of the thermoplastic resin may be deteriorated.

There is also a preferred range for the concentration of the organically modified layered silicate component and the nonionic surfactant component constituting the thermoplastic resin composite material. Preferably, the proportion of the organically modified layered silicate is 0.17 to 50 parts by weight and the proportion of the nonionic surfactant is 0.34 to 100 parts by weight based on 100 parts by weight of a thermoplastic resin. More preferably, the proportion of the organically modified layered silicate is 0.6 to 15 parts by weight and the proportion of the nonionic surfactant is 1.2 to 30 parts by weight based on 100 parts by weight of a thermoplastic resin. When the content of the organically modified layered silicate is less than 0.17 part by weight based on 100 parts by weight of a thermoplastic resin, the advantage of improving physical properties may be insufficient. On the other hand, when the content is more than 50 parts by weight, the dispersibility of the organically modified layered compound tends to be degraded, and toughness of the thermoplastic resin composite material obtained may be decreased. When the content of the nonionic surfactant is more than 100 parts by weight based on 100 parts by weight of a thermoplastic resin, the mechanical strength of the thermoplastic resin composite material may be decreased.
Known additives used in this technical field, i.e., a plasticizer, a heat stabilizer, an antioxidant, a crystallization accelerator, a flame retardant and a release agent may be added to the thermoplastic resin composite material of the present invention as desired.

The thermoplastic resin composite material according to the present invention can be formed into a film by simultaneous biaxial stretching, sequential biaxial stretching or inflation molding. Further, the composite material can be formed into any shape such as a bottle, sheet or pipe by a known molding technique such as injection molding or blow molding for the intended purposes. In particular, when processing the thermoplastic resin composite material of the present invention into a film by stretching, the film reduces its tendency to cause problems such as tears in a film in the stretching step due to agglomerates of organically modified layered silicate, decrease in transparency, and poor appearance.

### EXAMPLES

The present invention is now described with reference to Examples, but the present invention is not limited to the following Examples. The measurement methods and the molding method employed in the evaluation in Examples and Comparative Examples are described below.
(1) Haze: A measurement sample was heated in a compression machine at 200°C and compression molded into a thickness of 1 mm. The sample was rapidly cooled to about 30°C in a low temperature compression machine in which cooling water is circulated to be formed into a sheet. The haze (%) was measured at room temperature of 27°C in accordance with ASTM-D-1003. NDH-300A made by Nippon Denshoku Industries Co., Ltd. was used as a measurement machine.

(2) Dynamic storage elastic modulus: A measurement sample was heated in a compression machine at 200°C and press-molded into a thickness of 0.3 mm. The sample was rapidly cooled to about 30°C in a low temperature compression machine in which cooling water is circulated to be formed into a sheet. Measurement was performed by sampling the obtained sheet in a size of 10 mm x 35 mm in width. The dynamic storage elastic modulus (unit: Gdyn/cm²; hereinafter referred to as elastic modulus) at a temperature ranging from 25°C to 160°C was measured under conditions of a temperature increase rate of 10°C/minute, an applied strain of 0.01% and a frequency of 10 Hz. RSA-II made by Rheometric Scientific F.E. Ltd. was used as a measurement machine. The elastic modulus of the resins and the resin composite materials shown in the following Examples was evaluated under the above conditions, and it was found that the elastic modulus started to decrease at about 50°C due to glass transition of the resin, while the elastic modulus started to increase at about 90°C due to crystallization of the resin. In the present invention, the elastic modulus at 30°C was employed as the mechanical strength of the resin and the resin composite material in an amorphous state, and the maximum of the elastic modulus reached after crystallization at a temperature higher than the glass transition temperature is employed as the mechanical strength after crystallization.

(3) Measurement of molecular weight: the produced thermoplastic resin composite material was dissolved in chloroform and inorganic components were removed by centrifugation. The weight average molecular weight was measured with a GPC device. HLC-8220GPC made by TOSOH CORPORATION was used as a measurement machine. To calculate the weight average molecular weight, a calibration curve on a polystyrene basis was used.

### [Example 1]

Organically modified layered silicate (product name: Cloisite 30B available from Southern Clay Products Inc. (organic onium salt: dihydroxyethylene hardened tallow amine hydrochloride)) was added to polyoxyethylene stearyl ether (product name: Brij 72 available from ICI Americas (the number of moles of polyoxyethylene added is 2)) which is a nonionic surfactant melted by heating at 120°C. The mixture was mixed in a mortar to give a composite material. For the weight ratio of mixing, 200 parts by weight of polyoxyethylene stearyl ether was added to 100 parts by weight of organically modified layered silicate. Then, polylactic acid (product name: Nature Works 4031D available from Cargill Dow LLC) was melted using Laboplastomill made by Toyo Seiki Seisaku-sho, Ltd. at 200°C. The above composite material was added to polylactic acid so that the organically modified layered silicate component accounted for 1.7 parts by weight and the polyoxyethylene stearyl ether accounted for 3.4 parts by weight based on 100 parts by weight of the polylactic acid, and kneading was performed to prepare a thermoplastic resin composite material. The time for kneading was 5 minutes and the rotational speed of the roller was 50 rpm. The haze and the elastic modulus (at 30°C and after crystallization) of the obtained thermoplastic resin composite material are shown in Table 1.

### [Example 2]

A composite material and a thermoplastic resin composite material were prepared in the same manner as in Example 1 except that polyoxyethylene stearyl ether (product name: Brij76 available from ICI Americas (the number of moles added of polyoxyethylene is 10) was used as a nonionic surfactant. The haze and the elastic modulus (at 30°C and after crystallization) of the obtained thermoplastic resin composite material are shown in Table 1.
[Example 3]
A composite material and a thermoplastic resin composite material were prepared in the same manner as in Example 1 except that polyoxyethylene stearyl ether (product name: Brij78 available from ICI Americas (the number of moles added of polyoxyethylene is 20) was used as a nonionic surfactant. The haze and the elastic modulus (at 30°C and after crystallization) of the obtained thermoplastic resin composite material are shown in Table 1.

### [Example 4]

Organically modified layered silicate (product name: Cloisite 30B available from Southern Clay Products Inc. (modified organic cation: dihydroxyethylene hardened tallow amine hydrochloride)) was added to polyoxyethylene stearyl ether (product name: Brij72 available from ICI Americas (the number of moles added of polyoxyethylene is 2)) which is a nonionic surfactant melted by heating at 120°C. The mixture was mixed in a mortar to give a composite material. For the weight ratio of mixing, 100 parts by weight of polyoxyethylene stearyl ether was added to 100 parts by weight of organically modified layered silicate. Then, polylactic acid (product name: Nature Works 4031D available from Cargill Dow LLC) was melted using Laboplastomill made by Toyo Seiki Seisaku-sho, Ltd. at 200°C. The above composite material was added to the polylactic acid so that the organically modified layered silicate component accounted for 1.7 parts by weight and the polyoxyethylene stearyl ether accounted for 1.7 parts by weight based on 100 parts by weight of the polylactic acid, and kneading was performed to prepare a thermoplastic resin composite material. The time for kneading was 5 minutes and the rotational speed of the roller was 50 rpm. The haze and the elastic modulus (at 30°C and after crystallization) of the obtained thermoplastic resin composite material are shown in Table 1.

### [Example 5]

The thermoplastic resin composite material obtained in Example 1 was molded into a sheet having a thickness of 300 µm by compression molding, and simultaneous biaxial stretching was performed using a high temperature biaxial stretching tester made by Toyo Seiki Seisaku-sho, Ltd. The stretching temperature was 80°C, the stretching rate was 26.5 mm/s and the drawing ratio was 4 times in the longitudinal and the transversal direction. The obtained film was transparent and no tear or void was found.
[Example 6]
Simultaneous biaxial stretching was performed in the same manner as in Example 5 except that the thermoplastic resin composite material obtained in Example 2 was used. The obtained film was transparent and no tear or void was found.
[Example 7]
A thermoplastic resin composite material was prepared in the same manner as in Example 1 except that polylactic acid, product name 4042D available from Cargill Dow LLC (weight average molecular weight 210,000) and organically modified layered silicate, product name Somasif MEE available from CO-OP Chemical were used, and they were mixed so that the organically modified layered silicate component accounted for 13 parts by weight and the nonionic surfactant accounted for 17 parts by weight, and kneaded. The weight average molecular weight (Mw) of the obtained thermoplastic resin composite material is shown in Table 2.

### [Comparative Example 1]

Kneading was performed under the same conditions as in Example 1 using polylactic acid (product name Nature Works 4031D available from Cargill Dow LLC) alone. The obtained haze and the elastic modulus (at 30°C and after crystallization) are shown in Table 1.
[Comparative Example 2]
A thermoplastic resin composite material was prepared in the same manner as in Example 1 except that nonionic surfactant was not used. The haze and the elastic modulus (at 30°C and after crystallization) of the obtained thermoplastic resin composite material are shown in Table 1.
[Comparative Example 3]
A thermoplastic resin composite material was prepared in the same manner as in Example 1 except that organically modified layered silicate was not added. The haze and the elastic modulus (at 30°C and after crystallization) of the obtained thermoplastic resin composite material are shown in Table 1.

### [Comparative Example 4]

Polyethylene glycol (molecular weight 2000, product name PEG#2000 available from Aldrich Chemical Co., Inc.; hereinafter written as PEG2000) was melted at 120°C, and organically modified layered silicate (product name Cloisite 30B available from Southern Clay Products Inc.) was added thereto. The mixture was mixed in a mortar to give a composite material. For the weight ratio of mixing, 200 parts by weight of polyethylene glycol was added to 100 parts by weight of organically modified layered silicate. Then, the above composite material was added to polylactic acid (product name Nature Works 4031D available from Cargill Dow LLC), which is aliphatic polyester, melted using Laboplastomill made by Toyo Seiki Seisaku-sho, Ltd. at 200°C so that the organically modified layered silicate accounted for 1.7 parts by weight and the polyethylene glycol accounted for 3.4 parts by weight based on 100 parts by weight of the polylactic acid, and kneading was performed to prepare a thermoplastic resin composite material. The time for kneading was 5 minutes and the rotational speed of the roller was 50 rpm. The haze and the elastic modulus (at 30°C and after crystallization) of the obtained thermoplastic resin composite material are shown in Table 1.
[Comparative Example 5]
A composite material and a thermoplastic resin composite material were prepared in the same manner as in Example 4 except that tributyl citrate acetate (product name ATBC available from Taoka Chemical Co., Ltd.), which is polycarboxylic acid, was used. The haze and the elastic modulus (at 30°C and after crystallization) of the obtained thermoplastic resin composite material are shown in Table 1.

### [Comparative Example 6]

Simultaneous biaxial stretching was performed in the same manner as in Example 5 except that the thermoplastic resin composite material obtained in Comparative Example 3 was used. A great number of agglomerates were formed in the film and the appearance was poor.
[Comparative Example 7]
Simultaneous biaxial stretching was performed in the same manner as in Example 5 except that the thermoplastic resin composite material obtained in Comparative Example 5 was used. A great number of agglomerates and tears were formed in the stretched film and stretching could not be performed.

### [Comparative Example 8]

A thermoplastic resin composite material was prepared in the same manner as in Example 7 except that nonionic surfactant was not used and organically modified layered silicate was added in a proportion of 10 parts by weight. The weight average molecular weight (Mw) of the obtained thermoplastic resin composite material is shown in Table 2.
[Comparative Example 9]
A thermoplastic resin composite material was obtained in the same manner as in Example 7 except that nonionic surfactant was not used and organically modified layered silicate was added in a proportion of 15 parts by weight. The weight average molecular weight (Mw) of the obtained thermoplastic resin composite material is shown in Table 2.

**[Table 1]**

| | polylactic acid 4031D (parts by weight) | additive | organically modified layered silicate (parts by weight) | additive (parts by weight) | haze [%] | elastic modulus [Gdyn/cm²] (30°C) | elastic modulus [Gdyn/cm²] (maximum after crystallization) |
|---|---|---|---|---|---|---|---|
| Example 1 | 100 | Brij72 | 1.7 | 3.4 | 14.2 | 21.90 | 2.41 |
| Example 2 | 100 | Brij76 | 1.7 | 3.4 | 15.3 | 21.30 | 2.20 |
| Example 3 | 100 | Brij78 | 1.7 | 3.4 | 20.7 | 21.10 | 2.03 |
| Example 4 | 100 | Brij72 | 1.7 | 1.7 | 15.5 | 21.20 | 2.10 |
| Comparative Example 1 | 100 | none | 0 | 0 | 8.9 | 21.20 | 1.47 |
| Comparative Example 2 | 100 | Brij72 | 0 | 3.4 | 8.3 | 19.20 | 1.22 |
| Comparative Example 3 | 100 | none | 1.7 | 0 | 44.4 | 21.70 | 2.36 |
| Comparative Example 4 | 100 | PEG2000 | 1.7 | 3.4 | 23.8 | 21.70 | 2.15 |
| Comparative Example 5 | 100 | ATBC | 1.7 | 3.4 | 31.0 | 18.00 | 2.06 |

As described above, thermoplastic resin composite materials having excellent mechanical strength and excellent in transparency were obtained in Example 1 to Example 4 as shown in Table 1. In Example 5 and Example 6, a stretched film excellent in transparency and appearance could be obtained. In Comparative Example 1, physical properties of polylactic acid to which nothing was added are shown. The result indicates that no sufficient strength was obtained. In Comparative Example 2, since only organically modified layered silicate was added to a thermoplastic resin (without using a nonionic surfactant), transparency was decreased. In Comparative Example 3, only a nonionic surfactant was added (without using organically modified layered silicate), the obtained thermoplastic resin composite material had poor mechanical properties although it had good transparency. In Comparative Example 4, polyethylene glycol composed only of polyoxyethylene chains was used instead of a nonionic surfactant, but sufficient transparency was not obtained. In Comparative Example 5, tributyl citrate acetate which is polycarboxylic acid was used, but sufficient transparency was not obtained. In Comparative Example 6 and Comparative Example 7, it was found that the stretched film had a great number of agglomerates and tears, and the film had poor stretchability.

**[Table 2]**

| | average molecular weight Mw | polylactic acid 4042D (parts by weight) | organically modified layered silicate (parts by weight) | nonionic surfactant (parts by weight) |
|---|---|---|---|---|
| Example 7 | 184,000 | 100 | 13 | 17 |
| Comparative Example 8 | 75,000 | 100 | 10 | none |
| Comparative Example 9 | 64,000 | 100 | 15 | none |

As shown in Table 2, it was found that while the thermoplastic resin composite material of Example 7 had a weight average molecular weight of 184,000, the thermoplastic resin composite material of Comparative Example 8 and Comparative Example 9 had a weight average molecular weight of 75,000 and 64,000, which are noticeably decreased from 210,000 before combining.

### INDUSTRIAL APPLICABILITY

By using the composite material of the present invention, a thermoplastic resin composite material excellent in mechanical strength, transparency, stretchability and appearance upon stretching can be provided. Such materials are can be used as an air cushion material, a food packaging material or an injection molded article.

## Claims

1. A composite material comprising
(A) 100 parts by weight of at least one organically modified layered silicate produced by treating a layered silicate with an organic onium salt and
(B) 50 to 1000 parts by weight of at least one nonionic surfactant.

2. The composite material according to claim 1, wherein the organic onium salt contains at least one polar group.

3. The composite material according to claim 2, wherein the polar group is a hydroxyl group.

4. The composite material according to any one of claims 1 to 3, wherein the nonionic surfactant is polyoxyethylene alkyl ether represented by the following formula:
CₙH₂ₙ₊₁-(OCH₂-CH₂)ₘOH (n=12 to 18, m=2 to 40)

5. A thermoplastic resin composite material comprising at least one composite material according to any one of claims 1 to 4 and at least one thermoplastic resin.

6. The thermoplastic resin composite material according to claim 5, wherein the thermoplastic resin is an aliphatic polyester.

7. A stretched film comprising the thermoplastic resin composite material according to claim 5 or 6.
